Europäisches Patentamt

European Patent Office

Office européen des brevets

(11) Veröffentlichungsnummer: **0 307 699 B1**

(12) **EUROPÄISCHE PATENTSCHRIFT**

(45) Veröffentlichungstag der Patentschrift: **04.03.92**

(21) Anmeldenummer: **88114035.4**

(22) Anmeldetag: **29.08.88**

(51) Int. Cl.⁵: **B01D  33/15**

(54) **Scheibeneindicker.**

(30) Priorität: **16.09.87 DE 3730990**

(43) Veröffentlichungstag der Anmeldung:
**22.03.89 Patentblatt  89/12**

(45) Bekanntmachung des Hinweises auf die
Patenterteilung:
**04.03.92 Patentblatt  92/10**

(84) Benannte Vertragsstaaten:
**AT BE CH DE ES FR GB GR IT LI LU NL SE**

(56) Entgegenhaltungen:
**DE-A- 3 235 003**
**DE-C- 205 814**
**FR-A- 1 556 104**

(73) Patentinhaber: **ANDREAS KUFFERATH KG**
**Andreas-Kufferath-Platz**
**W-5160 Düren-Mariaweiler(DE)**

(72) Erfinder: **Krieger, Uwe**
**Engelbert-Nyt-Strasse 6**
**W-5160 Düren(DE)**

(74) Vertreter: **Schumacher, Bernd, Dipl.-Ing.**
**Am Schwaberg 13**
**W-6450 Hanau 6(DE)**

Rank Xerox (UK) Business Services

**Beschreibung**

Die Erfindung betrifft einen Scheibeneindicker gemäß dem Oberbegriff von Anspruch 1.

Bei einem solchen Scheibeneindicker gemäß der DE-OS 32 35 003 strömt die einzudickende Suspension über einen Stoffverteiler in einzelne von dem stationären Trog begrenzte Suspensionskammern zwischen jeweils zwei mit Siebgewebe bespannten Scheiben, die nachfolgend als Siebfilterscheiben bezeichnet werden und sich mit einer Welle drehen. Die Suspension entwässert durch die Siebgewebe, und der eingedickte Stoff wird durch die Rotation der Siebfilterscheiben auf der zum Zulauf gegenüberliegenden Seite ausgeworfen. Die Entwässerung der Suspension erfolgt ausschließlich aufgrund des hydrostatischen Druckunterschiedes zwischen der Suspensions- bzw. Dickstoffkammer und der vom Trog begrenzten (im übrigen wie die Suspensionskammern nach oben zur atmosphärischen Umgebung offenen) Filtrat- bzw. Klarwasserkammer. Das Suspensionsniveau in den Suspensionskammern erstreckt sich etwa bis zur Drehachse der Welle.

Es sind ferner Scheibeneindicker bekannt, bei denen die Filtratkammern in Richtung zu einem die Suspension aufnehmenden stationären Trog geschlossen sind und aus einzelnen, umfangsmäßig aneinandergereihten, mit einer Welle drehbaren Sektoren bestehen. Alle Sektoren sind mit unterschiedlichen mitdrehbaren Kanälen in der Welle verbunden. Die Kanäle führen zu einem aufwendigen Steuerkopf, über den die einzelnen Sektoren bedarfsgerecht und positionsabhängig mit Unterdruck oder Überdruck beaufschlagt werden können. Ein solcher Scheibeneindicker ist kompliziert, aufwendig und betriebsanfällig.

Der vorliegenden Erfindung liegt die Aufgabe zugrunde, einen Scheibeneindicker der im Oberbegriff genannten Art mit einfachen Maßnahmen so zu gestalten, daß er zur Verbesserung des Entwässerungsvorgangs problemlos mit Unterdruck betrieben werden kann.

Im Rahmen der Erfindung wurde festgestellt, daß sich bei dem Scheibeneindicker gemäß Oberbegriff das Filtrat aus dem sogenannten Primärfiltrat und dem Klarfiltrat zusammensetzt. Das Primärfiltrat ist der Anteil, der durch das Siebgewebe fließt, so lange dieses noch nicht mit einer Faserschicht belegt ist. Die Stoffdichte des Primärfiltrats ist insbesondere bei Suspensionen mit großem Feinstoffanteil naturgemäß relativ groß. Das Klarfiltrat ist der Anteil des Klarwassers, der durch die gebildete Faserschicht fließt. Die Stoffdichte des Klarfiltrats ist daher sehr klein. Je schlechter eine Suspension entwässert, umso geringer wird der Anteil des Klarfiltrats. Durch eine größere Druckdifferenz, zum Beispiel durch Anwendung von Unterdruck auf der Filtratseite, kann der Anteil des Klarfiltrats vergrößert werden, da die Menge des Primärfiltrats hiervon nur geringfügig beeinflußt wird. Außer dieser Verbesserung des Anteils an Klarfiltrat vergrößert der Unterdruck die Durchsatzleistung des Scheibeneindickers.

Zur Lösung der gestellten Aufgabe werden deshalb bei einem Scheibeneindicker der im Oberbegriff von Anspruch 1 genannten Art die im Kennzeichen dieses Anspruchs aufgeführten Merkmale vorgeschlagen. Die zur Realisierung der Unterdruckanwendung erforderlichen Maßnahmen sind ausgesprochen einfach und erfordern lediglich die Querwände in der Filtratkammer sowie die an den Filtratablauf angeschlossene Unterdruckquelle. Die einzelnen Filtratkammerabschnitte sind in radialer Richtung offen und können somit einzeln mit Unterdruck beaufschlagt werden, damit die Entwässerung der Suspension verbessert und beschleunigt wird. Die Querwände sorgen dabei für eine umfangsmäßige Druckunterteilung der Filtratkammern, so daß diese unterhalb des Suspensions- bzw. Flüssigkeitsniveaus problemlos mit Unterdruck beaufschlagt werden können, und zwar ohne schädliche Sekundärlufteinflüsse.

Die Weiterbildung von Anspruch 2 eignet sich für Scheibeneindicker mit mehreren in axialer Richtung hintereinander angeordneten Filtratkammern, die jeweils von zwei Siebfilterscheiben begrenzt sind.

Die Weiterbildung von Anspruch 3 hat den Vorteil, daß sich relativ kleine Filtratkammerabschnitte erzielen lassen, die jeweils im Trogbodenbereich definiert mit Unterdruck beaufschlagt werden können. Bei weniger Querwänden ergibt sich das Problem, daß die Zeit zwischen dem vollständig erfolgten Eintauchen und dem bereits beginnenden Auftauchen der Filtratkammerabschnitte aus dem Suspensionsniveau, also die Zeit der Unterdruckbeaufschlagung, zu kurz wird.

Die Weiterbildungen der Ansprüche 4 bis 6 ermöglichen eine gleichmäßige Verteilung der Filtratkammerabschnitte und eine ausgesprochen einfache Ausbildung sowie Anordnung der Querwände.

Die Weiterbildung von Anspruch 7 ermöglicht auch mit einer relativ leistungsarmen Unterdruckquelle, wie mit einer Fallrohranordnung, das Aufbauen eines ausreichenden Unterdrucks, da die Dichtleisten das Eintreten von Sekundärluft hemmen bzw. verhindern. Die umfangsmäßige Abdichtung der Filtratkammerabschnitte untereinaner erfolgt immer dann, wenn die Dichtleisten außerhalb des Bodenbereichs bzw. außerhalb des Bereichs des Filtratablaufs am Trog abdichtend ananliegen.

Zusätzlich zu den Merkmalen von Anspruch 7 oder alternativ hierzu eignet sich die Weiterbildung von Anspruch 8. Die engen Spalte stellen an sich eine ausreichende Maßnahme dar, um mit einer Unterdruckquelle vertretbarer Leistung einen ausreichenden Unterdruck herzustellen. Dies gilt umso mehr, wenn sich in den umfangsmäßig angrenzenden Filtratkammerabschnitten, die nicht von Unterdruck beaufschlagt werden, Restfiltrat befindet, das nicht schnell genug durch die engen Spalte abfließen kann und somit eine Flüssigkeitsabdichtung bildet.

Eine intermittierende bzw. impulsartige Betriebsweise der Unterdruckquelle gemäß der Weiterbildung von Anspruch 9 kann zweckmäßig sein. Alternativ hierzu ist gemäß der Weiterbildung von Anspruch 10 jedoch auch eine kontinuierliche Betriebsweise möglich. Dies gilt immer dann, wenn die Anzahl der Querwände so groß ist, daß die Filtratkammerabschnitte den Bereich des Filtratablaufs erreichen bzw. verlassen, während sie sich vollständig unterhalb des Suspensionsniveaus befinden. Die kontinuierliche Betriebsweise hat den Vorteil, daß eine aufwendigere Synchronisation zwischen dem Bewegungsablauf und der Unterdruckbeaufschlagung entfallen kann.

Die Weiterbildungen der Ansprüche 11 und 12 begünstigen das Ablaufen des Filtrats sowie das Aufbringen des Unterdrucks und ermöglichen ferner eine gleichzeitige Unterdruckbeaufschlagung zumindest zweier aneinander angrenzender Filtratkammerabschnitte.

Die Weiterbildung von Anspruch 13 ermöglicht beispielsweise eine Trennung des Filtrats in Primärfiltrat und Klarfiltrat. Da die Siebfilterscheiben bei jedem Umlauf nach dem Auftauchen aus der Suspension gereinigt werden und somit in gereinigtem Zustand wieder in die Suspension eintauchen, tritt aus dem umfangsmäßig ersten Bereich des Filtratablaufs Primär- bzw. Trübfiltrat aus, und das Klarfiltrat fällt im nachfolgenden Bereich des Filtratablaufs an. Dadurch ist eine Trennung problemlos möglich.

Die Weiterbildungen der Ansprüche 14 und 15 ermöglichen eine individuelle Anpassung der Unterdruckbeaufschlagung an die jeweiligen Betriebsverhältnisse. Beispielsweise können die verschiedenen Sammelleitungen mit unterschiedlich großem Unterdruck beaufschlagt werden, um ein optimales Ergebnis zu erzielen. Außerdem vereinfacht das Verbinden mehrerer Filtratabläufe über eine Sammelleitung den Gesamtaufbau.

Die Weiterbildungen der Ansprüche 16 bis 18 stellen bautechnisch einfache Maßnahmen zum bedarfsgerechten Trennen von Primärfiltrat und Klarfiltrat dar. Da der Übergang vom Primärfiltrat zum Klarfiltrat nicht abrupt erfolgt, ermöglicht die Verstellbarkeit der Trennwand eine individuelle Anpassung an das gewünschte Betriebsergebnis.

Die Weiterbildung von Anspruch 19 geht von dem Gedanken aus, daß die Unterdruckbeaufschlagung im wesentlichen nur im Bereich des Klarfiltrats von Bedeutung ist, da das Primärfiltrat vom Unterdruck kaum beeinflußt wird. Insoweit kann die Unterdruckbeaufschlagung - sofern möglich und vom Primärfiltrat-Ablaufabschnitt beim Überstreichen nicht beeinträchtigt - auf den Bereich des Klarfiltrats beschränkt werden, wobei sie jedoch im Bereich des Primärfiltrats nicht weiter störend wäre.

Die Weiterbildung von Anspruch 20 ermöglicht eine sehr einfache Unterdruckbeaufschlagung ohne motorische Saugpumpe.

Mit der Weiterbildung von Anspruch 21 kann eine bedarfsgerechte Einstellung des Filtratanfalles erfolgen.

Die Weiterbildung von Anspruch 22 führt zu einem zum Beispiel für Spritzzwecke verwendbaren Superklarfiltrat, das einfach seitlich abströmen kann.

Die Weiterbildungen der Ansprüche 23 bis 25 ermöglichen eine optimale Unterdruckbeaufschlagung sowie eine optimale Entwässerung sowie Filtratauftrennung.

Bei der Weiterbildung von Anspruch 26 ist eine pro Umlauf noch längere und damit wirksamere Entwässerung bei noch feiner unterteilbarer Filtrattrennung möglich.

Die Weiterbildung von Anspruch 27 reduziert das Anfallen von abzuführendem Primär- bzw. Trübfiltrat.

Mit der Weiterbildung von Anspruch 28 wird in einfacher Weise eine sich durch den Unterdruck verstärkende Abdichtung der Filtratkammern erzielt, da die Dichtlippen durch den Unterdruck gegen den Trog gesaugt werden.

Die Weiterbildung von Anspruch 29 beinhaltet verschiedene Möglichkeiten zum Reinigen der Siebfilterscheiben nach dem Auftauchen aus der Suspension. Während es sonst vielfach üblich ist, im Bereich der Filtratkammern rechtwinklig auf die Siebfilterscheiben gerichtete Spritzdüsen vorzusehen, ist dieses im vorliegenden Fall wegen des Vorhandenseins der Querwände nicht möglich. Die Weiterbildungen der Ansprüche 30 und 31 beinhalten deshalb eine zweckmäßige Variante zur impulsartigen Druckbeaufschlagung der aus der Suspension auftauchenden Filtratkammerabschnitte, um auf diese Weise eine wirksame Reinigung der Siebfilterscheiben vorzusehen.

Der erfindungsgemäße Scheibeneindicker hat bei vergleichsweise einfachem Aufbau eine wesentlich bessere Durchsatzleistung und führt zu einer wirksameren, schnelleren Entwässerung der Suspension, wobei überdies eine Trennung in mehrere Filtratkomponenten, wie in Primärfiltrat und Klarfiltrat, in einfacher Weise möglich ist.

Die Erfindung wird nachfolgend an zeichnerisch dargestellten Ausführungsbeispielen näher erläutert. Es zeigen:

Figur 1 - einen Scheibeneindicker nach einer ersten Ausführungsform in einem schematischen Querschnitt,

Figur 2 - den Scheibeneindicker aus Figur 1 in einem schematischen Längsschnitt,

Figur 3 - ein schematisches Schaltbild für den Antrieb und die Synchronisation des Scheibeneindickers und

Figur 4 - einen Scheibeneindicker nach einer zweiten Ausführungsform in einem schematischen Querschnitt.

Gemäß den Zeichnungen hat der Scheibeneindicker ein Gehäuse 10 mit einem stationären zylindrischen Trog 12, in dem sich eine Welle 14 mit mehreren daran befestigten, gegenseitig beabstandeten Siebfilterscheiben 16 dreht. An ihrem Umfang sind die Siebfilterscheiben 16 in irgendeiner Weise gegenüber dem Trog 12 abgedichtet, beispielsweise mittels elastischer Dichtlippen 42, die an den Siebfilterscheiben 16 befestigt sind und am Trog 12 bzw. an hieran befindlichen Dichtkanten abdichtend entlanggleiten.

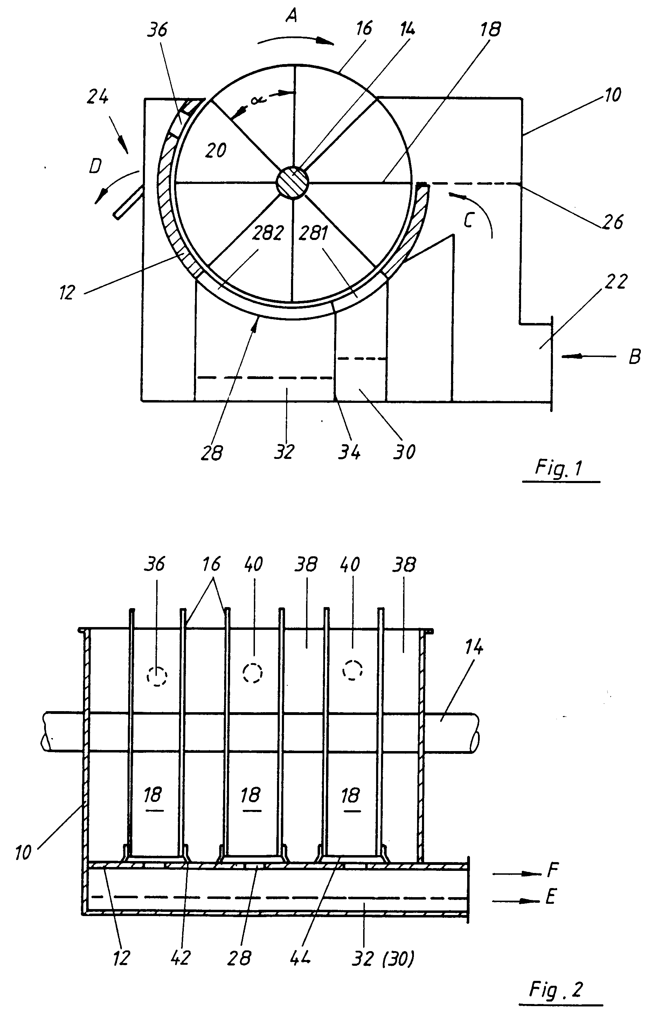

Der Troginnenraum wird durch die Siebfilterscheiben 16 entlang der Welle 14 abwechselnd in Suspensionskammern 38, in denen sich die Dichtlippen 42 befinden, und Filtratkammern 40 unterteilt. Die letzteren werden durch radial und axial verlaufende Querwände 18 in einzelne zum Trog 12 offene Filtratkammerabschnitte 20 unterteilt. Im vorliegenden Fall sind die Querwände 18 jeweils an der Welle 14 und an zwei Siebfilterscheiben 16 befestigt. Sie sind in sich eben und erstrecken sich radial auswärts, so daß sich zwischen ihren äußeren Rändern und dem Trog 12 nur enge Spalte ergeben (siehe Figur 1).

Die Siebfilterscheiben 16 können mit einem Siebgewebe bespannte Scheiben sein und dienen der Entwässerung einer Suspension, die den Suspensionskammern 38 über einen Suspensionszulauf 22 und einen Suspensionsverteiler an einer Seite des Scheibeneindickers zugeführt wird. Die Suspension strömt in Pfeilrichtung B und C bis zum Suspensionsniveau 26 (der Trog 12 ist etwa bis zur Drehachse bzw. bis zur Welle 14 gefüllt), um in die Suspensionskammern 38 zwischen den Entwässerungs- bzw. Siebfilterscheiben 16 einzuströmen. Die Siebfilterscheiben 16 drehen sich mit der Welle 14 in Pfeilrichtung A, so daß der entwässerte Dickstoff aus den Suspensionskammern 38 an der entgegengesetzten Seite des Scheibeneindickers über Suspensionsabläufe 24 in Pfeilrichtung D aus dem Scheibeneindicker austreten kann. Unterhalb des Suspensionsniveaus 26 entwässert die Suspension über die Siebfilterscheiben 16, und das dadurch entstehende Filtrat strömt aus den Filtratkammern 40 bzw. Filtratkammerabschnitten 20 über einen im vorliegenden Fall langgestreckten, in Ablaufabschnitte 281, 282 unterteilten Filtratablauf 28 im Trogboden einerseits in eine umfangsmäßig vordere Sammelleitung 30 und andererseits in eine umfangsmäßig nachfolgende Sammelleitung 32, die von der Sammelleitung 30 durch eine Trennwand 34 abgetrennt ist. Die Sammelleitung 30 dient in erster Linie zum Aufnehmen des Primär- bzw. Trübfiltrats, während die Sammelleitung 32 hauptsächlich zum Aufnehmen des Klarfiltrats dient. Die unterschiedlichen Filtratniveaus sind gestrichelt dargestellt.

Gemäß Figur 2 befinden sich an den äußeren Rändern der Querwände 18 sich über deren Länge erstreckende Dichtleisten 44, wie elastische Dichtlippen, die den engen Spalt zwischen den Querwänden 18 und dem Trog 12 abdichtend überbrükken. Die Dichtleisten 44 können somit die sich in Strömungseingriff mit dem Filtratablauf 28 befindlichen Filtratkammerabschnitte 20 umfangsmäßig abdichten, soweit sich die Dichtleisten 44 nicht im Bereich des Filtratablaufs 28 befinden. Wenn auf die Sammelleitung 32 und/oder die Sammelleitung 30 ein Unterdruck ausgeübt wird, kann sich dieser über den Filtratablauf 28 bzw. dessen Ablaufabschnitte 281, 282 in dem oder den hiermit strömungsmäßig verbundenen Filtratkammerabschnitten 20 in der Weise auswirken, daß die Entwässerung beschleunigt und verstärkt wird. In Figur 2 ist schematisch dargestellt, daß im unteren Teil der Sammelleitung 32 und/oder 30 das Filtrat in Pfeilrichtung E abströmt, während über dem Filtratniveau zum Bilden eines Unterdrucks ein Absaugen in Pfeilrichtung F erfolgt.

Die umfangsmäßige Abdichtung der einzelnen Filtratkammerabschnitte 20 untereinander kann auf verschiedene Weise erfolgen. Zum einen ist es möglich, die genannten Dichtleisten 44 am äußeren Rand der Querwände 18 anzuordnen. Zum anderen genügt es teilweise bereits, das Spiel bzw. den Spalt zwischen dem äußeren Rand der Querwände 18 und dem Trog 12 ausreichend klein zu machen. Dann kann das ausserhalb der unterdruckbeaufschlagten Filtratkammerabschnitte 20 auftretende Filtrat nicht ausreichend schnell über die Spalte nach unten abfließen, so daß jeder Filtratrückstau als umfangsmäßige Flüssigkeitsabdichtung fungiert. Unabhängig davon wäre auch ein gewisses Ansaugen von Sekundärluft unschädlich, wenn die Unterdruckquelle ausreichend leistungsstark bemessen ist.

Sobald die Filtratkammerabschnitte 20 aus dem Suspensionsniveau 26 auftauchen, können sie über Anschlüsse 36 mit einem pneumatischen Druckstoß beaufschlagt werden, um die sich auf der Seite der Suspensionskammern 38 an den Siebfilterscheiben 16 abgesetzten Faserstoffe hiervon noch wirksamer als durch bloßes schwerkraftbedingtes Abschälen zu lösen, also die Siebfilterscheiben 16 zu reinigen. Hierzu ist der zylindrische Trog 12 auf der Seite des Suspensionsablaufes 24 nach oben verlängert, so daß der sich jeweils in diesem Bereich befindliche Filtratkammerabschnitt 20 ähnlich wie im Bereich des Trogbodens zumindest teilweise abgedichtet ist, um den Druckstoß aufbringen zu können. Statt dieses Reinigungsmittels oder zusätzlich hierzu ist es auch möglich, in den Suspensionskammern 38 mechanische Schaber oder schräggestellte, abschälende Spritzdüsen vorzusehen.

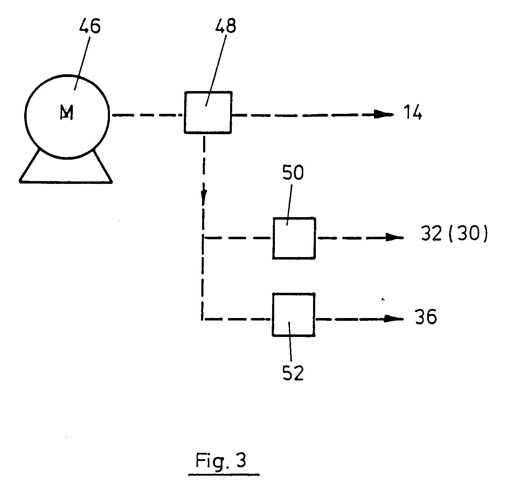

Sofern die Sammelleitung 32 bzw. 30 und/oder die Anschlüsse 36 impulsartig mit Unterdruck bzw. Überdruck beaufschlagt werden, ist es erforderlich, diese Vorgänge mit dem Drehvorgang der Welle 14 zu synchronisieren. Dieser Vorgang ist schematisch in Figur 3 dargestellt. Ein Antriebsmotor 46 dreht die Welle 14 des Scheibeneindickers, und ein Drehpositionsfühler erfaßt die jeweilige Drehposition der Welle 14. Diese Information gelangt einerseits zu einer Unterdruckquelle 50, die mit der Sammelleitung 32 und/oder 30 verbunden ist, und andererseits zu einer Überdruckquelle 52, die mit den Anschlüssen 36 verbunden ist. Auf diese Weise kann die Funktion der Unterdruckquelle 50 und/oder der Überdruckquelle 52 jeweils mit dem Betriebsablauf des Scheibeneindickers synchronisiert werden.

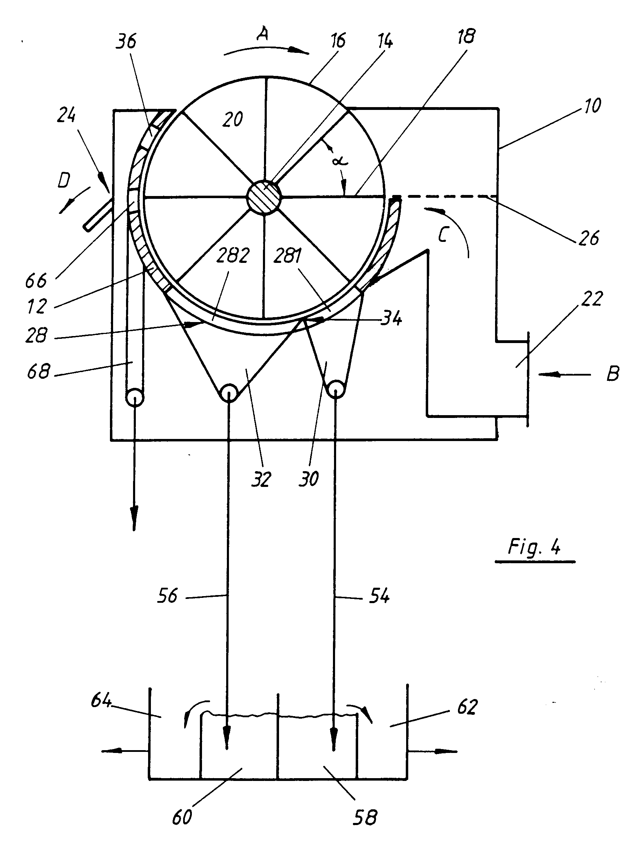

Die Ausführungsform aus Figur 4 unterscheidet sich nur in folgenden Punkten von derjenigen aus den Figuren 1 bzw. 1 bis 3 (im übrigen wird auf die obigen Ausführungen verwiesen):

Der Filtratablauf 28 ist wie zuvor durch die vorzugsweise in Umfangsrichtung verstellbare Trennwand 34 in beispielsweise zwei Ablaufabschnitte 281 (für Primär- bzw. Trübfiltrat) und 282 (für Klarfiltrat) unterteilt. Zur Unterdruckbeaufschlagung sind diese mit Fallrohren 54, 56 ausreichend großer Länge (z. B. 5 bis 8 m) und genügend kleinem Strömungsquerschnitt (damit der unterdruckerzeugende Flüssigkeitsstrom möglichst nicht abreißt) verbunden. Die letzteren greifen in filtratgefüllte Tauchbecken 58, 60 ein, aus denen das Filtrat in Sammelbecken 62, 64 (mit Abläufen) überströmt. Diese Unterdruckerzeugung ist besonders einfach (da Pumpen entfallen) und unanfällig. Selbst nach Unterbrechung des Betriebsablaufes stellt sich der Unterdruck nach Aufbau der Flüssigkeitssäule im Fallrohr 54, 56 selbsttätig wieder ein.

Außerdem ist der Trog 12 etwa auf dem Niveau der Welle 14 ablaufseitig mit einem Superklarfiltrat-Ablauf 66 (kann auch bei Figur 1 vorhanden sein) versehen, aus dem noch sauberes Klarfiltrat über ein Ablaufrohr 68 abströmen kann.

Der Umfangswinkel $\alpha$ der Filtratkammerabschnitte 20 sollte maximal etwa 60° betragen und beträgt gemäß Darstellung etwa 45° (hierfür beträgt der Umfangswinkel des gesamten Filtratablaufs 28 demnach bei bis zur Welle 14 reichendem Suspensionsniveau 26 maximal 180° - $2.\alpha$, also 60° bzw. 90°). Auf diese Weise lassen sich eine pro Umlauf langzeitige bzw. wirksame Entwässerung und eine gute Filtrattrennung erzielen.

**Patentansprüche**

1. Scheibeneindicker mit wenigstens einer in einem stationären Trog (12) drehbar gelagerten, zur Entwässerung einer Faserstoff-Suspension dienenden Siebfilterscheibe (16) an einer im wesentlichen horizontal angeordneten, antreibbaren Welle (14), vorzugsweise mit mehreren gegenseitig axial beabstandeten Siebfilterscheiben, die jeweils an ihrem Umfang gegen den Trog abgedichtet sind und eine zum Trog offene, hiervon begrenzte Suspensionskammer (38) von einer zum Trog offenen, hiervon begrenzten Filtratkammer (40) trennen, wobei jede Suspensionskammer an einer Trogseite einen Suspensionszulauf (22) sowie an der gegenüberliegenden Trogseite einen Suspensionsablauf (24) und jede Filtratkammer im Trogboden einen Filtratablauf (28) aufweisen, **dadurch gekennzeichnet,** daß jede Filtratkammer (40) durch an der Welle (14) und/oder Siebfilterscheibe (16) befestigte und gegen den Trog abgedichtete Querwände (18) in mehrere umfangsmäßig verteilte, zumindest unterhalb des Suspensionsniveaus (26) in den Suspensionskammern (38) gegeneinander abgedichtete Filtratkammerabschnitte (20) unterteilt ist und daß der bodenseitige Filtratablauf (28) ausgangsseitig mit einer Unterdruckquelle (50; 54, 56, 58, 60) verbunden ist.

2. Scheibeneindicker nach Anspruch 1, gekennzeichnet durch sich zwischen der Welle (14) sowie jeweils zwei Siebfilterscheiben (16) erstreckende Querwände (18).

3. Scheibeneindicker nach Anspruch 1 oder 2, gekennzeichnet durch mindestens sechs über den Umfang einer jeden Filtratkammer (40) verteilte Querwände (18).

4. Scheibeneindicker nach einem der Ansprüche 1 bis 3, dadurch gekennzeichnet, daß die Querwände (18) gleichmäßig über den Umfang des Eindickers verteilt sind.

5. Scheibeneindicker nach einem der Ansprüche 1 bis 4, gekennzeichnet durch sich in bezug auf die Welle (14) radial und axial erstreckende Querwände (18).

**6.** Scheibeneindicker nach einem der Ansprüche 1 bis 5, gekennzeichnet durch ebene Querwände (18).

**7.** Scheibeneindicker nach einem der Ansprüche 1 bis 6, gekennzeichnet durch an den radial äußeren Rändern der Querwände (18) befestigte, sich über deren axiale Länge erstreckende und gegen den Trog (12) abdichtende Dichtleisten (44), wie elastische Dichtlippen.

**8.** Scheibeneindicker nach einem der Ansprüche 1 bis 7, gekennzeichnet durch enge Spalte zwischen den radial äußeren Rändern der Querwände (18) und dem Trog (12).

**9.** Scheibeneindicker nach einem der Ansprüche 1 bis 8, gekennzeichnet durch eine mit der Drehposition der Welle (14) synchronisierte impulsartige Betriebsweise der Unterdruckquelle (50), wie einer Saugpumpe, zur Unterdruckbeaufschlagung jeweils zumindest eines vollständig unterhalb des Suspensionsniveaus (26) und in Strömungsverbindung mit dem Filtratablauf (28) befindlichen Filtratkammerabschnitts (20).

**10.** Scheibeneindicker nach einem der Ansprüche 1 bis 8, gekennzeichnet durch eine kontinuierliche Betriebsweise der Unterdruckquelle (50; 54, 56, 58, 60), wie einer Fallrohranordnung oder einer Saugpumpe, zur Unterdruckbeaufschlagung der sich jeweils vollständig unterhalb des Suspensionsniveaus (26) und in Strömungsverbindung mit dem Filtratablauf (28) befindlichen Filtratkammerabschnitte (20).

**11.** Scheibeneindicker nach einem der Ansprüche 1 bis 10, gekennzeichnet durch wenigstens einen in Umfangsrichtung des Eindikkers langgestreckt ausgebildeten Filtratablauf (28).

**12.** Scheibeneindicker nach einem der Ansprüche 1 bis 10, gekennzeichnet durch einen in Umfangsrichtung des Eindickers in mehrere Ablaufabschnitte (281, 282) unterteilten Filtratablauf (28).

**13.** Scheibeneindicker nach einem der Ansprüche 1 bis 12, dadurch gekennzeichnet, daß mehrere, vorzugsweise zwei, Sammelleitungen (30, 32} für abzuführendes Filtrat mit in Umfangsrichtung des Eindickers unterschiedlichen, vorzugsweise zwei, Ablaufabschnitten (281, 282) des Filtratablaufs (28) verbunden sind.

**14.** Scheibeneindicker nach Anspruch 13, dadurch gekennzeichnet, daß einzelne oder alle Sammelleitungen (30, 32) mit einer oder mehreren Unterdruckquellen (50; 54, 56, 58, 60) verbunden sind.

**15.** Scheibeneindicker nach Anspruch 13 oder 14, dadurch gekennzeichnet, daß jede Sammelleitung (30, 32) mit den umfangslagemäßig gleichartigen Ablaufabschnitten (281; 282) der Filtratabläufe (28) aller gegenseitig axial beabstandeten Filtratkammern (40) verbunden ist.

**16.** Scheibeneindicker nach einem der Ansprüche 13 bis 15, gekennzeichnet durch eine Einstellbarkeit der ablaufwirksamen Umfangslänge bzw. -winkel von jeweils zwei Ablaufabschnitten (281, 282) für Primärfiltrat einerseits und Klarfiltrat andererseits.

**17.** Scheibeneindicker nach einem der Ansprüche 13 bis 16, dadurch gekennzeichnet, daß die Sammelleitung (30, 32) durch eine in Längsrichtung des Eindickers verlaufende Trennwand (34) in Primärfiltrat- und Klarfiltrat-Ablaufabschnitte (281, 282) unterteilt ist.

**18.** Scheibeneindicker nach Anspruch 17, dadurch gekennzeichnet, daß die Trennwand (34) in Quer- bzw. Umfangsrichtung des Eindickers verstellbar ausgebildet ist.

**19.** Scheibeneindicker nach einem der Ansprüche 16 bis 18, gekennzeichnet durch eine Unterdruckbeaufschlagung nur der Sammelleitung (32) für Klarfiltrat.

**20.** Scheibeneindicker nach einem der Ansprüche 1 bis 19, dadurch gekennzeichnet, daß der Filtratablauf (28) oder wenigstens einer seiner Ablaufabschnitte (281, 282) mit einem in ein Tauchbecken (58, 60) mündenden Fallrohr (54, 56) verbunden ist, dessen Länge entsprechend dem erwünschten Saugdruck angepaßt ist und dessen Strömungsquerschnitt einerseits einen ausreichenden Filtratstrom gewährleistet sowie andererseits einen Strömungsabriß vermeidet.

**21.** Scheibeneindicker nach einem der Ansprüche 1 bis 20, gekennzeichnet durch mehrere ventilgesteuerte Ablaufabschnitte (281, 282) des Filtratablaufs (28).

**22.** Scheibeneindicker nach einem der Ansprüche 1 bis 21, dadurch gekennzeichnet, daß der Trog an seiner Suspensionsablaufseite im Bereich jeder Filtratkammer (40) einen etwa auf dem Niveau der Welle (14) befindlichen Superklarfiltrat-Ablauf (66) aufweist.

**23.** Scheibeneindicker nach einem der Ansprüche 1 bis 22, gekennzeichnet durch eine Bemessung des Umfangswinkels (α) eines jeden Filtratkammer abschnitts (20) unter Berücksichtigung des gesamten Umfangswinkels des Filtratablaufs (28) in der Weise, daß jeder Filtratkammer abschnitt (20) vor dem Erreichen und vor dem Verlassen des Filtratablaufs (28) vollständig unter dem Suspensionsniveau (26) angeordnet ist.

**24.** Scheibeneindicker nach einem der Ansprüche 1 bis 23, gekennzeichnet durch einen großen gesamten Umfangswinkel des Filtratablaufs (28).

**25.** Scheibeneindicker nach einem der Ansprüche 1 bis 24, dadurch gekennzeichnet, daß der Umfangswinkel des Ablaufabschnitts (281) für Primär- bzw. Trübfiltrat kleiner als der Umfangswinkel des Ablaufabschnitts (282) für Klarfiltrat ist.

**26.** Scheibeneindicker nach einem der Ansprüche 1 bis 25, gekennzeichnet durch 12 bis 24 Filtratkammerabschnitte (20).

**27.** Scheibeneindicker nach einem der Ansprüche 1 bis 26, gekennzeichnet durch eine Rezirkulation des Primär- bzw. Trübfiltrats aus den zugehörigen Ablaufabschnitten (281) in die Suspensionskammern (38).

**28.** Scheibeneindicker nach einem der Ansprüche 1 bis 27, dadurch gekennzeichnet, daß die Siebfilterscheiben (16) gegenüber dem Trog (12) durch periphere Dichtlippen (42) abgedichtet sind, die an den die Suspensionskammern (38) begrenzenden Scheibenseiten befestigt sind.

**29.** Scheibeneindicker nach einem der Ansprüche 1 bis 28, mit Mitteln zum Reinigen der Siebfilterscheiben nach einem Auftauchen aus der Suspension, dadurch gekennzeichnet, daß auf der Suspensionsseite der Siebfilterscheiben (16) mit diesen in Reinigungseingriff tretende mechanische Schaber oder mittels Flüssigkeitsstrahlen abschälende Spritzdüsen und/oder auf der Filtratseite der Siebfilterscheiben (16) Druckstoßmittel (36, 52) vorgesehen sind.

**30.** Scheibeneindicker nach Anspruch 29, gekennzeichnet durch eine impulsartige Druckbeaufschlagung zumindest jeweils eines sich vollständig oberhalb des Suspensionsniveaus (26) befindlichen Filtratkammerabschnitts (20).

**31.** Scheibeneindicker nach Anspruch 30, dadurch gekennzeichnet, daß der Trog (12) an seiner Suspensionsablaufseite im Bereich der Filtratkammern (40) nach oben verlängert ist und mit diesen in Strömungsverbindung stehende, mit einer Überdruckquelle (52) verbundene Druckstoßanschlüsse (36) aufweist.

**Claims**

**1.** A disc concentrator with at least one screen filter disc (16) rotatably mounted in a stationary trough (12) and used for dewatering a suspension of fibrous material and disposed on a substantially horizontal drivable shaft (14), preferably with a number of axially-spaced screen filter discs, each sealed along its periphery against the trough and bounding a suspension chamber (38) open towards the trough and separating it from a filtrate chamber (40) open towards the trough and also bounded thereby, each suspension chamber having a suspension inlet (22) on one side of the trough and a suspension outlet (24) on the opposite side of the trough and each filtrate chamber having a filtrate outlet (28) in the bottom of the trough, characterised in that transverse walls (18) secured to the shaft (14) and/or to the screen filter disc (16) and sealed against the trough divide each filtrate chamber (40) into a number of peripherally distributed portions (20) sealed from one another, at least under the level (26) of suspension in the suspension chambers (38), and the filtrate outlet (28) at the bottom is connected to a negative-pressure source (50, 54; 56, 58, 60) on the outflow side.

**2.** A disc concentrator according to claim 1, characterised by transverse walls (18) extending between the shaft (14) and each pair of screen filter discs (16).

**3.** A disc concentrator according to claim 1 or 2, characterised by at least six transverse walls (18) distributed around the periphery of each filtrate chamber (40).

**4.** A disc concentrator according to any of claims 1 to 3, characterised in that the transverse walls (18) are uniformly distributed around the periphery of the concentrator.

**5.** A disc concentrator according to any of claims 1 to 4, characterised by transverse walls (18) which extend radially and axially relative to the shaft (14).

**6.** A disc concentrator according to any of clams 1 to 5, characterised by flat transverse walls (18).

7. A disc concentrator according to any of claims 1 to 6, characterised by sealing strips (44), e.g. resilient sealing lips, which are secured to the radial outer edges of the transverse walls (18), extend over the axial length thereof and provide a seal against the trough (12).

8. A disc concentrator according to any of claims 1 to 7, characterised in that narrow gaps between the radially outer edges of the transverse walls (18) and the trough (12).

9. A disc concentrator according to any of claims 1 to 8, characterised by pulsed operation, synchronised with the rotary position of the shaft (14), of the negative pressure source (50) e.g. a suction pump, for supplying negative pressure to at least each filtrate chamber portion (20) which is completely under the suspension level (26) and is in flow connection with the filtrate outlet (28).

10. A disc concentrator according to any of claims 1 to 8, characterised by continuous operation of the negative-pressure source (50; 54, 56, 58, 60), e.g. a downpipe arrangement or a suction pump, for supplying negative pressure to each filtrate chamber portion (20) which is completely under the suspension level (26) and is in flow connection with the filtrate outlet (28).

11. A disc concentrator according to any of claims 1 to 10, characterised by at least one filtrate outlet (28) which is elongate in the peripheral direction of the concentrator.

12. A disc concentrator according to claims 1 to 10, characterised by a filtrate outlet (28) which is divided into a number of portions (281, 282) in the peripheral direction of the concentrator.

13. A disc concentrator according to any of claims 1 to 12, characterised in that a number of collecting pipes (30, 32), preferably two pipes, for discharged filtrate are provided with various portions (281, 282), preferably two portions, of the filtrate outlet (28) in the peripheral direction of the concentrator.

14. A disc concentrator according to claim 13, characterised in that some or all collecting pipes (30, 32) are connected `to one or more negative-pressure sources (50; 54, 56, 58, 60).

15. A disc concentrator according to claim 13 or 14, characterised in that each collecting pipe (30, 32) is connected to those portions (281; 282) of the filtrate outlets (28) of all the axially spaced filtrate chambers (40) which are in identical peripheral positions.

16. A disc concentrator according to any of claims 13 to 15, characterised by a facility for adjusting the peripheral length or angle (affecting the outflow) of each pair of outlet portions (281, 282) for primary filtrate on the one hand and clear filtrate on the other hand.

17. A disc concentrator according to any of claims 13 to 16, characterised in that a partition wall (34) extending in the longitudinal direction of the concentrator divides the collecting pipe (30, 32) into outlet portions (281, 282) for primary filtrate and clear filtrate.

18. A disc concentrator according to claim 17, characterised in that the partition wall (34) is made adjustable in the transverse or peripheral direction of the concentrator.

19. A disc concentrator according to any of claims 16 to 18, characterised in that negative pressure is supplied only to the collecting pipe (32) for clear filtrate.

20. A disc concentrator according to any of claims 1 to 19, characterised in that the filtrate outlet (28) or at least one portion (281, 282) thereof is connected to a downpipe (54, 56) which opens into an immersion basin (58, 60), the length of the pipe being adapted to the desired suction pressure and the flow section thereof ensuring a sufficient flow of filtrate and avoiding a break in flow.

21. A disc concentrator according to any of claims 1 to 20, characterised by a number of valve-controlled portions (281, 282) of the filtrate outlet (28).

22. A disc concentrator according to any of claims 1 to 21, characterised in that the trough, on the suspension outlet side, has a super-clear filtrate outlet (66) approximately at the level of the shaft (14) in the region of each filtrate chamber (40).

23. A disc concentrator according to any of claims 1 to 22, characterised in that the peripheral angle ($\alpha$) of each filtrate chamber portion (20) is given a value, considering the total peripheral angle of the filtrate outlet (28), such that each filtrate chamber portion (20) is completely under the level (26) of suspension before reaching and after leaving the filtrate outlet (28).

24. A disc concentrator according to any of claims 1 to 23, characterised by a maximum total peripheral angle of the filtrate outlet (28).

25. A disc concentrator according to any of claims 1 to 24, characterised in that the peripheral angle of the outlet portion (281) for primary or turbid filtrate is less than the peripheral angle of the outlet portion (282) for clear filtrate.

26. A disc concentrator according to any of claims 1 to 25, characterised by twelve to twenty-four filtrate chamber portions (20).

27. A disc concentrator according to any of claims 1 to 26, characterised by recirculation of the primary or turbid filtrate from the associated outlet portions (281) into the suspension chambers (28).

28. A disc concentrator according to any of claims 1 to 27, characterised in that the screen filter discs (16) are sealed from the trough (12) by peripheral sealing lips (42) which are secured to the sides of the discs bounding the suspension chambers (38).

29. A disc concentrator according to any of claims 1 to 28, comprising means for cleaning the screen filter plates after emerging from the suspension, characterised in that mechanical scrapers or injection nozzles using liquid jets for cleaning by peeling are provided on the suspension side of the screen filter discs (16) and/or in that shock-pressure means (36,52) are provided on the filtrate side of the screen filter discs (16).

30. A disc concentrator according to claim 29, characterised by pulsed application of pressure to at least one respective filtrate-chamber portion (20) which is completely above the level (26) of suspension.

31. A disc concentrator according to claim 30, characterised in that the trough (12), on the suspension outlet side, is prolonged upwards in the region of the filtrate chambers (40) and comprises water-hammer connections (36) which are in flow connection with the filtrate chambers (40) and are connected to a positive pressure source (52).

**Revendications**

1. Epaississeur à disques, comprenant au moins un disque de filtre-tamis (16) destiné à la déshydratation d'une suspension de matière fribreuse qui est monté de manière tournante dans une auge stationnaire (12), sur un arbre (14) orienté sensiblement dans le sens horizontal et pouvant être entraîné, de préférence une pluralité de disques de filtretamis disposés axialement à distance les uns par rapport aux autres, dont la circonférence est respectivement rendue étanche par rapport à l'auge et qui séparent une chambre de suspension (38) ouverte en direction de l'auge et délimitée par celle-ci d'une chambre de filtrat (40) ouverte en direction de l'auge et délimitée par celle-ci, chaque chambre de suspension présentant sur l'un des côtés de l'auge une arrivée de suspension (22) et sur le côté opposé de l'auge, un écoulement de suspension (24), et chaque chambre de filtrat présentant dans le fond de l'auge, une sortie de filtrat (28), **caractérisé en ce** que chaque chambre de filtrat (40) est subdivisée par des parois transversales (18) fixées sur l'arbre (14) et/ou le disque de filtretamis (16) et rendues étanches par rapport à l'auge, en plusieurs sections de chambre de filtrat (20) réparties sur la périphérie et rendues étanches les unes par rapport aux autres au moins au-dessous du niveau de suspension (26) dans les chambres de suspension (38), et que la sortie de filtrat (28) du côté fond est raccordée du côté sortie à une source de dépression (50; 54; 56, 58, 60).

2. Epaississeur à disques selon la revendication 1, caractérisé en ce qu'il comprend des parois transversales (18) qui s'étendent entre l'arbre (14) et respectivement deux disques de filtretamis (16).

3. Epaississeur à disques selon l'une des revendications 1 ou 2, caractérisé en ce qu'il comprend au moins six parois latérales (18) réparties sur la périphérie de chacune des chambres de filtrat (40).

4. Epaississeur à disques selon l'une des revendications 1 à 3, caractérisé en ce que les parois transversales (18) sont réparties uniformément sur la périphérie de l'épaississeur.

5. Epaississeur à disques selon l'une des revendications 1 à 4, caractérisé en ce que les parois transversales (18) s'étendent radialement et axialement par rapport à l'arbre (14).

**6.** Epaississeur à disques selon l'une des revendications 1 à 5, caractérisé en ce qu'il comprend des parois transversales (18) planes.

**7.** Epaississeur à disques selon l'une des revendications 1 à 6, caractérisé en ce qu'il comprend des baguettes d'étanchéité (44), par exemple des lèvres d'étanchéité élastiques, qui sont fixées sur les bords radialement extérieurs des parois transversales (18), s'étendent sur la longueur axiale de celles-ci et assurent l'étanchéité par rapport à l'auge (12).

**8.** Epaississeur à disques selon l'une des revendications 1 à 7, caractérisé en ce que les bords radialement extérieurs des parois transversales (18) et l'auge (12) sont séparés par des fentes étroites.

**9.** Epaississeur à disques selon l'une des revendications 1 à 8, caractérisé par un fonctionnement impulsionnel de la source de dépression (50), par exemple une pompe aspirante, synchronisé avec la position angulaire de l'arbre (14), pour créer la dépression respectivement dans au moins une section de chambre de filtrat (20) qui se situe entièrement audessous du niveau de suspension (26) et se trouve en communication hydraulique avec la sortie de filtrat (28).

**10.** Epaississeur à disques selon l'une des revendications 1 à 8, caractérisé par un fonctionnement en continu de la source de dépression 50; 54, 56, 58, 60), par exemple un système de tuyaux de descente ou une pompe aspirante, pour l'application de la dépression aux sections de chambre de filtrat (20) qui se situent respectivement entièrement au-dessous du niveau de suspension (26) et se trouvent en communication d'écoulement avec la sortie de filtrat (28).

**11.** Epaississeur à disques selon l'une des revendications 1 à 10, caractérisé en ce qu'il comprend au moins une sortie de filtrat (28) allongée dans la direction circonférentielle de l'épaississeur.

**12.** Epaississeur à disques selon l'une des revendications 1 à 10, caractérisé en ce qu'il comprend une sortie de filtrat (28) subdivisée dans la direction circonférentielle de l'épaississeur en plusieurs sections d'écoulement (281, 282).

**13.** Epaississeur à disques selon l'une des revendications 1 à 12, caractérisé en ce que plusieurs, de préférence deux, conduites collectrices (30, 32) pour le filtrat à évacuer communiquent avec des sections d'écoulement (281, 282) de la sortie de filtrat (28) qui sont différentes dans la direction circonférentielle de l'épaississeur et de préférence au nombre de deux.

**14.** Epaississeur à disques selon la revendication 13, caractérisé en ce que certaines conduites collectrices (30, 32) ou toutes les conduites collectrices sont raccordées à une ou plusieurs source(s) de dépression (50; 54, 56, 58, 60).

**15.** Epaississeur à disques selon l'une des revendications 13 ou 14, caractérisé en ce que chaque conduite collectrice (30, 32) est raccordée aux sections d'écoulement (281, 282) des sorties de filtrat (28) , homologues quant à la position périphérique, de toutes les chambres de filtrat (40) disposées axialement à distance les unes par rapport aux autres.

**16.** Epaississeur à disques selon l'une des revendications 13 à 15, caractérisé en ce qu'il permet un réglage de la longueur et respectivement de l'angle périphérique efficace pour l'écoulement, de respectivement deux sections d'écoulement (281, 282) pour le filtrat primaire d'une part et le filtrat clair, d'autre part.

**17.** Epaississeur à disques selon l'une des revendications 13 à 16, caractérisé en ce que la conduite collectrice (30, 32) est divisée par une cloison de séparation (34) s'étendant dans la direction longitudinale de l'épaississeur, en sections d'écoulement (281, 282) pour le filtrat primaire et le filtrat clair.

**18.** Epaississeur à disques selon la revendication 17, caractérisé en ce que la cloison de séparation (34) est réglable dans le sens transversal et respectivement circonférentiel.

**19.** Epaississeur à disques selon l'une des revendications 16 à 18, caractérisé par une application de la dépression à la seule conduite collectrice (32) pour le filtrat clair.

**20.** Epaississeur à disques selon l'une des revendications 1 à 19, caractérisé en ce que la sortie de filtrat (28) ou au moins l'une de ses sections d'écoulement (281, 282) est raccordée à un tuyau de descente (54, 56) débouchant dans une cuve à immersion (58, 60), dont la longueur est adaptée à la pression d'aspiration désirée et dont la section de passage assure d'une part un flux de filtrat suffisant et évite d'autre part une rupture de l'écoulement.

21. Epaississeur à disques selon l'une des revendications 1 à 20, caractérisé en ce qu'il comprend plusieurs sections d'écoulement (281, 282) de la sortie de filtrat (28) commandées par soupapes.

22. Epaississeur à disques selon l'une des revendications 1 à 21, caractérisé en ce que l'auge est équipée, du côté de l'écoulement de la suspension, dans la région de chaque chambre de filtrat (40), d'une sortie de filtrat superclair (66) située sensiblement au niveau de l'arbre (14).

23. Epaississeur à disques selon l'une des revendications 1 à 22, caractérisé en ce que l'angle périphérique (α) de chaque section de chambre de filtrat (20) est choisi en tenant compte de l'angle périphérique total de la sortie de filtrat (28), de telle façon que, avant d'atteindre et avant de quitter la sortie de filtrat (28), chaque section de chambre de filtrat (20) se situe entièrement au-dessous du niveau de suspension (26).

24. Epaississeur à disques selon l'une des revendications 1 à 23, caractérisé par un grand angle périphérique total de la sortie de filtrat (28).

25. Epaississeur à disques selon l'une des revendications 1 à 24, caractérisé en ce que l'angle périphérique de la section d'écoulement (281) pour le filtrat primaire et respectivement trouble est plus petit que l'angle périphérique de la section d'écoulement (282) pour le filtrat clair.

26. Epaississeur à disques selon l'une des revendications 1 à 25, caractérisé en ce qu'il comporte 12 à 24 sections de chambre de filtrat (20).

27. Epaississeur à disques selon l'une des revendications 1 à 26, caractérisé par une recirculation du filtrat primaire ou trouble provenant des sections d'écoulement associées (281), dans les chambres de suspension (38).

28. Epaississeur à disques selon l'une des revendications 1 à 27, caractérisé en ce que les disques de filtretamis (16) sont rendus étanches par rapport à l'auge (12) par des lèvres d'étanchéité périphériques (42) lesquelles sont fixées sur les faces des disques qui délimitent les chambres de suspension (38).

29. Epaississeur à disques selon l'une des revendications 1 à 28, avec des moyens pour le nettoyage des disques de filtre-tamis après une émersion de la suspension, caractérisé en ce que du côté suspension des disques de filtre-tamis (16) sont prévus des racleurs mécaniques coopérant avec ceux-ci pour le nettoyage, ou des buses assurant un pelage au moyen de jets de liquide et/ou des moyens pour la production de coups de pression (36, 52) disposés du côté filtrat des disques de filtre-tamis (16).

30. Epaississeur à disques selon la revendication 29, caractérisé par une mise sous pression impulsionnelle d'au moins l'une des sections de chambre de filtrat (20) située entièrement au-dessus du niveau de suspension (26).

31. Epaississeur à disques selon la revendication 30, caractérisé en ce que l'auge (12) est prolongée vers le haut du coté de l'écoulement de suspension, dans la région des chambres de filtrat (40), et en ce qu'il comprend des raccordements de coups de pression (36) en communication hydraulique avec lesdites chambres de filtrat et reliés à une source de surpression (52).

EP 0 307 699 B1

Fig. 1

Fig. 2

Fig. 3

Fig. 4